# EUROPÄISCHE PATENTANMELDUNG

(11) **EP 4 715 283 A1**
(43) Veröffentlichungstag der Anmeldung: **25.03.2026**
(21) Anmeldenummer: 25201149.9
(22) Anmeldetag: 09.09.2025
(51) Int. Cl.: F24S 10/50, F24S 10/55, H02S 10/30

(54) **PVT-MODUL, VERFAHREN ZUR HERSTELLUNG EINES PVT-MODULS UND PVT-ANORDNUNG**

(30) Priorität: 20.09.2024 DE 102024127309
(71) Anmelder: Muhr und Bender KG, 57439 Attendorn (DE)
(72) Erfinder: MUHR, Thomas, 57439 Attendorn (DE); BUCHKREMER, Stefan, 51580 Reichshof (DE); DANGER, Elisabeth, 33100 Paderborn (DE); SCHOLEMANN, Björn, 57489 Drolshagen (DE)
(74) Vertreter: Neumann Müller Oberwalleney Patentanwälte PartG mbB

(57) **Zusammenfassung**

PVT-Modul (10) mit einer photovoltaischen Zelle (12) und einem thermischen Absorber (14), thermischer Absorber (14), Verfahren zur Herstellung eines PVT-Moduls (10) und PVT-Anordnung mit mindestens zwei PVT-Modulen (10).

## Beschreibung

Die Anmeldung betrifft ein PVT-Modul mit einer photovoltaischen Zelle und einem thermischen Absorber, einen thermischen Absorber, ein Verfahren zur Herstellung eines PVT-Moduls und eine PVT-Anordnung mit mindestens zwei PVT-Modulen.

Ein Photovoltaik-Thermie-Modul, hier als PVT-Modul bezeichnet, dient zur kombinierten Strom- und Wärmeerzeugung. Es kann beispielsweise zur Bereitstellung von Niedertemperaturwärme für Wärmepumpen zur Erzeugung von Warmwasser und Heizwärme und zur Gebäudekühlung eingesetzt werden und kann dabei gleichzeitig zumindest einen Teil des Strombedarfs der Wärmepumpe und/oder eines Haushalts decken.

Die Druckschrift DE 20 2016 003 756 U1 offenbart ein kombiniertes Photovoltaik-Thermie-Modul, bestehend aus einem Photovoltaikmodul, das auf der der Sonne abgewandten Seite mit einer Wärmeübertragerstruktur versehen ist, die von einem flüssigen oder gasförmigen Wärmeträgermedium durchströmt wird, wobei die Wärmeübertragerstruktur zu einem Teil in wärmeleitendem Kontakt mit dem Photovoltaikmodul steht, und zu einem anderen Teil ohne direkten Kontakt mit dem Photovoltaikmodul als Wärmeübertrager zwischen Luft und Wärmeträgermedium durch die Umgebungsluft verläuft.

Die US 11 870 392 B2 offenbart ein modulares Solarenergiesystem, das aus einem oder mehreren modularen Solarpaneelen besteht. Die Solarpaneele umfassen ein Paar im Allgemeinen ebene Platten, die miteinander verbunden sind, um dazwischen einen Kanal für die Zirkulation einer Flüssigkeit zu bilden. Die Solarmodule verfügen über Einlass- und Auslassflüssigkeitsleitungen, die über Verteiler mit einer Kaltflüssigkeits-Zuleitung bzw. einer Warmflüssigkeits-Rücklaufleitung in Fluidverbindung stehen. Die Platten bestehen vorzugsweise aus Aluminium und auf einer Platte ist eine Photovoltaikzellenmatrix angebracht, die zur Sonne ausgerichtet ist.

Die DE 10 2015 105 708 A1 offenbart ein Bauelement mit einer profilierten Vorderseite und einer Rückseite sowie wenigstens einer Fluidleitung, wobei das Bauelement dazu ausgelegt ist, bei Bestrahlen der Vorderseite mit Sonnenlicht ein Erwärmen eines in der Fluidleitung befindlichen Fluids zu ermöglichen.

Nachteilig ist ein aufwendiger und teurer Aufbau einer Wärmeübertragerstruktur mit einer Vielzahl von Komponenten, die zahlreiche den thermischen Wirkungsgrad reduzierende Wärmeübergänge und eine aufwendige Montage bedingen. Eine fertigungstechnische Skalierung hin zu hohen Stückzahlen erscheint vor diesem Hintergrund nur mit erheblichem Aufwand möglich.

Eine Aufgabe kann darin bestehen, ein PVT-Modul mit einer photovoltaischen Zelle und einem thermischen Absorber zur Verfügung zu stellen, bei dem der thermische Absorber effektiver thermische Energie aus der Umgebungsluft und/oder aus dem Wärmefluss der photovoltaischen Zelle gewinnt und in einem einzelnen Bauteil integriert ist.

Die Aufgabe wird durch ein PVT-Modul gemäß Anspruch 1 gelöst. In den Unteransprüchen sind vorteilhafte Ausführungsformen angegeben.

Das PVT-Modul bzw. Photovoltaik-Thermie-Modul weist eine photovoltaische Zelle und einen thermischen Absorber auf, wobei der thermische Absorber einen Plattenverbund aus überlappenden und miteinander in Kopplungsflächen stoffschlüssig verbundenen Platten aufweist. Die Platten sind außerhalb der Kopplungsflächen voneinander getrennt und zwischen den Platten sind außerhalb der Kopplungsflächen Kanäle durch einen Umformprozess mindestens einer der Platten ausgebildet, wobei die Kanäle ein in dem Plattenverbund integriertes Kanalsystem bilden. Der Plattenverbund weist mit der photovoltaischen Zelle in wärmeleitendem Kontakt stehenden Talabschnitte sowie von der photovoltaischen Zelle beabstandet angeordnete Plateauabschnitte und Flankenabschnitte auf, wobei die Kanäle zum Leiten eines flüssigen oder gasförmigen Wärmeträgermediums in den Talabschnitten und/oder in den Plateauabschnitten und/oder in den Flankenabschnitten angeordnet sind.

Die Kanäle können ausschließlich in den Talabschnitten und in den Plateauabschnitten oder ausschließlich in den Talabschnitten und in den Flankenabschnitten oder ausschließlich in den Talabschnitten und in den Flankenabschnitten angeordnet sein. Weiterhin können die Kanäle in den Talabschnitten und in den Plateauabschnitten und in den Flankenabschnitten angeordnet sein.

Die Verwendung der Pluralform für die Talabschnitte und die Plateauabschnitte und die Flankenabschnitte ist nicht auf eine jeweilige Vielzahl beschränkend zu verstehen. Vielmehr kann auch lediglich ein Talabschnitt bzw. Plateauabschnitt bzw. Flankenabschnitt vorgesehen sein. Die Kanäle können in nur einzelnen der Talabschnitte bzw. Plateauabschnitte bzw. Flankenabschnitte vorgesehen sein. Mehrere Kanäle können in einem einzelnen Talabschnitt bzw. Plateauabschnitt bzw. Flankenabschnitt verlaufen. Die Kanäle können von den Talabschnitten in die Flankenabschnitte bzw. von den Flankenabschnitten in die Plateauabschnitte bzw. umgekehrt verlaufen.

Der einteilige thermische Absorber weist vorteilhaft wenige Wärmeübergänge zwischen Bauteilen auf und ist dadurch effektiv. Da keine vollflächige Verbindung des thermischen Absorbers zu der photovoltaischen Zelle besteht, entstehen geringere thermische Spannungen.

Eine photovoltaische Zelle, auch als Solarzelle bezeichnet, ist ein elektronisches Bauelement, das Sonnenlicht direkt in elektrische Energie umwandelt. Dieser Prozess wird als photovoltaischer Effekt bezeichnet. In einer Solarzelle bestehen die Hauptmaterialien aus Halbleitern wie Silizium. Wenn Sonnenlicht auf die Zelle trifft, absorbiert das Halbleitermaterial Photonen. Diese Photonen regen die Elektronen im Halbleitermaterial an, sodass sie sich freibewegen können. Diese freien Elektronen erzeugen einen elektrischen Strom, wenn sie durch ein elektrisches Feld in der Zelle geleitet werden. Photovoltaische Zellen sind der grundlegende Bestandteil von Solarpanelen, die eine oder mehrere photovoltaische Zellen aufweisen können. Im Sinne der Anmeldung kann das PVT-Modul auch eine Vielzahl von photovoltaischen Zellen aufweisen und der thermische Absorber dementsprechend mit der Vielzahl von photovoltaischen Zellen verbunden sein.

Der thermische Absorber ist eine Vorrichtung, die thermische Energie per Wärmeleitung von der photovoltaischen Zelle und per Konvektion aus der Umgebungsluft in einen Stoffstrom in den Kanälen überträgt. Durch den Kanal kann ein wärmetragendes Fluid oder ein Kühlmedium geleitet werden. Die Platten des Plattenverbunds können beispielsweise durch Löten, Kleben oder Schweißen stoffschlüssig verbunden sein. Die Platten des Plattenverbunds können beispielsweise durch Roll-Bond-Technik stoffschlüssig verbunden werden. Die stoffschlüssig verbundenen Platten werden durch atomare oder molekulare Kräfte zusammengehalten und sind nicht lösbar. Zum Bereitstellen des Plattenverbunds können die Platten beispielsweise in Form von Bandmaterial verarbeitet werden, dass von entsprechenden Coils abgewickelt wird. Auf das Bandmaterial kann, gegebenenfalls nach einem Säubern und Entfetten desselben, eine Trennschicht aufgetragen werden, in der Regel nur auf einem der Bänder. Bei der Roll-Bond-Technik werden die Bänder durch Walzen unter hohem Druck durch sogenanntes Druckfügen miteinander verbunden. Optional kann das Material zuvor erwärmt werden. Die Trennschicht verhindert dabei bereichsweise das Verbinden der Bänder. Die Plattenverbunde werden vereinzelt, wobei der Schritt des Vereinzelns grundsätzlich bereits vor dem Fügen der Platten erfolgen kann. Alternativ können die Platten des Plattenverbunds durch Pressen stoffschlüssig verbunden werden, wobei gegebenenfalls auf die das Verbinden der Platten verhindernde Trennschicht verzichtet werden kann.

Der Umformprozess mindestens einer der Platten zum Ausbilden der Kanäle kann ein Innenhochdruckumformen sein, bei dem ein Innenhochdruck durch eine Öffnung zwischen die Platten eingebracht wird, indem ein Fluid, wie Druckluft, Wasser oder Öl, unter Druck in die Öffnung gepresst wird. Die nicht verbundenen Bereiche einer oder beider Platten werden dadurch zu einem Kanal aufgeweitet.

Gemäß einer Ausführungsform kann eine Oberfläche der photovoltaischen Zelle in eine in wärmeleitendem Kontakt mit den Talabschnitten stehende erste Teilfläche und eine zweite Teilfläche aufgeteilt sein, wobei ein Verhältnis der ersten Teilfläche zu der zweiten Teilfläche grundsätzlich zwischen 99/1 und 1/99 liegen kann, wobei Verhältnisse zwischen 0,1 und 10 sinnvoll erscheinen und insbesondere zwischen 0,5 und 2 liegen. Gemäß einer weiteren Ausführungsform kann ein Massenstrom des flüssigen oder gasförmigen Wärmeträgermediums durch die Talabschnitte zu einem Massenstrom des flüssigen oder gasförmigen Wärmeträgermediums durch die Plateauabschnitte und/oder durch die Flankenabschnitte in einem Verhältnis zwischen 99/1 und 1/99 stehen, wobei Verhältnisse der Volumenströme zwischen 0,1 und 10 sinnvoll erscheinen und insbesondere zwischen 0,5 und 2 liegen. Der Fachmann erkennt, dass selbiges für entsprechende Volumenströme und deren Verhältnisse gilt, da der Massenstrom des flüssigen oder gasförmigen Wärmeträgermediums über dessen Dichte mit dem Volumenstrom verknüpft ist.

Die Kanäle können sich im Querschnitt betrachtet über eine geringere Breite erstrecken als die jeweilige Erstreckung des zugehörigen Talabschnitts, Plateauabschnitts oder Flankenabschnitts.

Der Plattenverbund kann die Form eines Wellblechs oder eines Trapezblechs aufweisen, wobei die Plateauabschnitte über die Flankenabschnitte mit den Talabschnitten verbunden sind, sodass die Plateauabschnitte mit den Flankenabschnitten und der photovoltaischen Zelle einen Ventilationskanal bilden. Die Flankenabschnitte können grundsätzlich auch senkrecht zu den Plateauabschnitten und den Talabschnitten angeordnet sein oder mit diesen einen spitzen Winkel einschließen. In den Flankenabschnitten und/oder den Plateauabschnitten können Durchbrüche durch den Plattenverbund als Ventilationsöffnungen vorgesehen sein.

Die Talabschnitte und/oder die Plateauabschnitte können als Rundung einer Biegekante zwischen zwei Flankenabschnitten ausgebildet sein. In dem Fall können die Talabschnitte und/oder die Plateauabschnitte im Querschnitt eine annähernd infinitesimal geringe Erstreckung aufweisen, so dass zwei benachbarte Flankenabschnitte über die Biegekante direkt miteinander verbunden sind. Der Plattenverbund kann so die Formeines Faltenblechs aufweisen.

Gemäß einer weiteren Ausführungsform können die Flankenabschnitte und/oder die Plateauabschnitte zu einer Umgebung hin frei sein, um eine Umströmung der Flankenabschnitte und der Plateauabschnitte mit der Umgebungsluft zu ermöglichen. Das bedeutet, das kein weiteres Bauteil mit den Flankenabschnitten oder den Plateauabschnitten verbunden ist.

Gemäß einer weiteren Ausführungsform können die Kanäle in den Talabschnitten durch Verformen nur einer der Platten ausgeformt sein, wobei die von der photovoltaischen Zelle abgewandte Platte verformt ist. Dadurch liegt die unverformte, der photovoltaischen Zelle zugewandte Platte optimal an der Oberfläche der photovoltaischen Zelle an. Grundsätzlich können die Kanäle beidseitig, einseitig oder in einer lokal variierenden Kombination aus ein- und beidseitig verformt ausgeführt sein.

Die Plateauabschnitte können zwischen 15 mm und 100 mm von der photovoltaischen Zelle entfernt sein. Grundsätzlich ist ein Minimum des Abstands durch eine Höhe des Kanals zuzüglich der Blechdicke einer Platte gegeben. Ein Maximum ist durch einen Abstand der Rückseite des PV-Modul zu einer Dachoberfläche des Gebäudes gegeben. Die Blechdicken kann zwischen 0,5 mm und 4,5 mm liegen. Die Platten sind beispielsweise aus Metall, insbesondere aus Aluminium oder einer Aluminiumlegierung.

Die Kanäle können an einem ersten Ende mit mindestens einem Zulauf und an einem zweiten Ende mit mindestens einem Ablauf verbunden sein, wobei der Zulauf und/oder der Ablauf in Form eines Sammelkanals vorgesehen sein kann. Der Sammelkanal kann durch Verformen mindestens einer der Platten mittels Innenhochdruckumformen ausgebildet sein.

Gemäß einer weiteren Ausführungsform kann der thermische Absorber eine Oberflächenvergrößerung aufweisen, welche die Aufnahme von thermischer Energie per Konvektion aus der Umgebungsluft erhöht. Die Oberflächenvergrößerung kann in Form von an dem Plattenverbund angebrachten Rippen vorgesehen sein, die insbesondere entlang der Kanäle angebracht sind, beispielsweise durch Löten, Kleben, Schweißen, Klemmen, Schrauben oder Nieten. Dementsprechend können die Rippen an den Talabschnitten, an den Plateauabschnitten und/oder an den Flankenabschnitten angebracht sein. Alternativ kann die Oberflächenvergrößerung in Form einer Verformung des Plattenverbunds selbst ausgeführt sein, insbesondere im Bereich der Plateauabschnitte und/oder der Flankenabschnitte. Die Verformung kann beispielsweise eine Wellenform oder eine Zick-zack-Form sein. Diese Variante der Oberflächenvergrößerung erlaubt vorteilhaft auch die Anordnung einer größeren Anzahl von Kanälen über derselben Oberfläche der photovoltaischen Zelle.

Ein weiterer Gegenstand der Anmeldung betrifft einen thermischen Absorber mit einem Plattenverbund aus überlappenden und miteinander in Kopplungsflächen stoffschlüssig verbundenen Platten, wobei die Platten außerhalb der Kopplungsflächen voneinander getrennt sind, wobei zwischen den Platten außerhalb der Kopplungsflächen Kanäle durch einen Umformprozess an mindestens einer der Platten ausgebildet sind. Der Plattenverbund ist derart geformt, dass Talabschnitte in einer Kontaktebene gebildet und Plateauabschnitte sowie Flankenabschnitte beabstandet von der Kontaktebene angeordnet sind, wobei die Kanäle zum Leiten eines flüssigen oder gasförmigen Wärmeträgermediums in den Talabschnitten und/oder in den Plateauabschnitten und/oder in den Flankenabschnitten angeordnet sind. Der thermische Absorber ist zur Verbindung mit einer sonnenabgewandten Oberfläche einer photovoltaischen Zelle vorgesehen und bildet mit dieser das zuvor beschriebene PVT-Modul. Der thermische Absorber wird mit der sonnenabgewandten Oberfläche der photovoltaischen Zelle verbunden, beispielsweise durch Laminieren oder Kleben. Denkbar sind auch mechanische Verbindungen, wie Klemmen, Schrauben, Nieten etc. Sämtliche zuvor mit Bezug auf das PVT-Modul beschriebenen Merkmale und Ausführungsformen sind auf den thermischen Absorber anwendbar und übertragbar.

Ein weiterer Gegenstand der Anmeldung betrifft ein Verfahren zur Herstellung eines PVT-Moduls bzw. thermischen Absorbers, wobei ein Verhältnis der ersten Teilfläche zu der zweiten Teilfläche in Abhängigkeit einer lokal oder regional bedingt erwartbaren Sonnenstrahlungsleistung und/oder lokal oder regional bedingt erwartbaren Umgebungstemperaturen gewählt wird. Alternativ oder zusätzlich wird ein Verhältnis eines Massenstroms des flüssigen oder gasförmigen Wärmeträgermediums durch die Kanäle 20 in den Talabschnitten 15 zu dem Massenstrom durch die Kanäle 22 in den Plateauabschnitten 17 in Abhängigkeit der lokal oder regional bedingt erwartbaren Sonnenstrahlungsleistung und/oder der lokal oder regional bedingt erwartbaren Umgebungstemperaturen gewählt. Die Massenströme lassen sich beispielsweise durch eine Anzahl und/oder durch einen Strömungsquerschnitt der Kanäle einstellen.

Ein weiterer Gegenstand der Anmeldung betrifft eine PVT-Anordnung mit mindestens zwei PVT-Modulen, wie zuvor beschrieben, wobei die Kanäle jedes PVT-Moduls einen Zulauf mit einem Ablauf verbinden, wobei die Zuläufe der PVT-Module mit einer Vorlaufleitung verbunden sind und dass die Abläufe der PVT-Module mit einer Rücklaufleitung verbunden sind. Die Kanäle der jeweiligen PVT-Module in Richtung einer Strömung in der Vorlaufleitung weisen einen abnehmenden hydraulischen Widerstand auf. Der abnehmende hydraulische Widerstand der PVT-Module kann durch Unterschiede in einer Anzahl und/oder eines Strömungsquerschnitts der jeweiligen Kanäle ausgebildet sein.

Dadurch lässt sich ein hydraulischer Abgleich der parallel durch die Vorlaufleitung versorgten PVT-Module durch die Gestaltung der Kanäle einstellen, die beispielsweise bei der Herstellung mittels Roll-Bonding und Innenhochdruckumformen leicht variierbar ist, ohne die Produktionskosten zu erhöhen. Der Einsatz von Ventilen für den hydraulischen Abgleich kann vorteilhaft entfallen. Es können die hydraulischen und thermischen Vorteile der Parallelschaltung, wie geringer Druckverlust und homogene Temperaturverteilung mit den montagetechnischen Vorteilen einer Reihenschaltung erreicht werden.

Gemäß einer Ausführungsform können die Vorlaufleitung und/oder die Rücklaufleitung abschnittsweise in Form von Sammelkanälen in dem Plattenverbund der jeweiligen PVT-Module ausgebildet sein, wobei die Sammelkanäle zwischen den PVT-Modulen über Rohre und/oder Schläuche verbunden sind. Die Sammelkanäle können beispielsweise durch Innenhochdruckumformen gebildet werden.

Die Anschlüsse der Sammelkanäle in den PVT-Modulen zum Anschließen der Rohre können derart gestaltet sein, dass die PVT-Module nur in der Reihenfolge ihres ansteigenden hydraulischen Widerstands miteinander verbindbar sind, sodass eine fehlerhafte Montage vermieden wird. Weiterhin können die Anschlüsse der die Vorlaufleitung bildenden Sammelkanäle sich von den Anschlüssen der die Rücklaufleitung bildenden Sammelkanäle hinsichtlich ihrer Art, Form und/oder Anordnung unterscheiden, um einer Verwechslung von Vorlauf und Rücklauf zu vorzubeugen.

Nachfolgend wird die Erfindung mit Bezug auf die beiliegenden Zeichnungen weiter erläutert. Die Ausführungen beziehen sich auf das PVT-Modul, den thermischen Absorber, das Verfahren zur Herstellung eines PVT-Moduls und die PVT-Anordnung gleichermaßen. In den Figuren zeigt
Figur 1 eine Ausführungsform eines PVT-Moduls in einer schematischen perspektivischen Teildarstellung;
Figur 2 einen thermischen Absorber für eine weitere Ausführungsform eines PVT-Moduls in einer perspektivischen Darstellung;
Figur 3 eine Ausführungsform einer PVT-Anordnung in einer schematischen Darstellung;
Figur 4 eine weitere Ausführungsform einer PVT-Anordnung in einer schematischen Darstellung;
Figur 5 eine weitere Ausführungsform eines thermischen Absorbers für ein PVT-Modul in einer perspektivischen Darstellung;
Figur 6 eine weitere Ausführungsform eines PVT-Moduls in einer schematischen perspektivischen Teildarstellung;
Figur 7 eine weitere Ausführungsform eines PVT-Moduls in einer schematischen perspektivischen Teildarstellung.

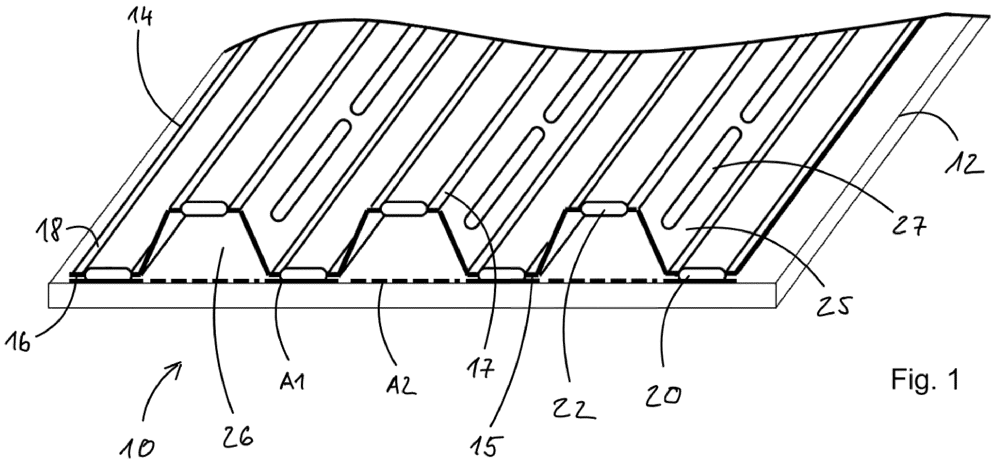

In der Figur 1 ist eine Ausführungsform eines PVT-Moduls 10 abschnittsweise dargestellt. Das PVT-Modul 10 weist eine photovoltaische Zelle 12 und einen thermischen Absorber 14 auf. Der thermische Absorber 14 weist einen Plattenverbund aus überlappenden und miteinander in Kopplungsflächen stoffschlüssig verbundenen Platten 16, 18 auf, wobei die Platten 16, 18 außerhalb der Kopplungsflächen voneinander getrennt sind. Zwischen den Platten 16, 18 sind außerhalb der Kopplungsflächen Kanäle 20, 22 durch Verformen mindestens einer der Platten 16, 18 mittels Innenhochdruckumformen ausgebildet. Der Plattenverbund weist mit einer sonnenabgewandten Seite der photovoltaischen Zelle 12 in wärmeleitendem Kontakt stehenden Talabschnitte 15 und von der photovoltaischen Zelle 12 beabstandet angeordneten Plateauabschnitte 17 auf, wobei die Kanäle 20, 22 zum Leiten eines flüssigen oder gasförmigen Wärmeträgermediums (nicht dargestellt) in den Talabschnitten 15 und in dem Plateauabschnitten 17 angeordnet sind. In dem dargestellten Ausführungsbeispiel verläuft jeweils ein erster Kanal 20 entlang jedes Talabschnitts 15 und jeweils ein zweiter Kanal 22 entlang jedes Plateauabschnitts 15. In dem Ausführungsbeispiel verläuft kein Kanal durch Flankenabschnitte 25. Allgemein gilt, dass die Kanäle 20, 22 zum Leiten des flüssigen oder gasförmigen Wärmeträgermediums in den Talabschnitten 15 und/oder in den Plateauabschnitten 17 und/oder in den Flankenabschnitten 25 angeordnet sind.

Der Plattenverbund weist in dem Ausführungsbeispiel die Form eines Trapezblechs auf, wobei auch eine Wellblech-Form denkbar ist. Die Plateauabschnitte 17 sind über die Flankenabschnitte 25 mit den Talabschnitten 15 verbunden, sodass die Plateauabschnitte 17 mit je zwei Flankenabschnitten 25 und der photovoltaischen Zelle 12 jeweils einen Ventilationskanal 26 bilden. In den Flankenabschnitten 25 sind Durchbrüche 27 durch den Plattenverbund als Ventilationsöffnungen vorgesehen.

Eine Oberfläche der sonnenabgewandten Seite der photovoltaischen Zelle 12 ist in eine in wärmeleitendem Kontakt mit den Talabschnitten 15 stehende erste Teilfläche A1 und eine zweite Teilfläche A2 aufgeteilt ist. Die Teilfläche A1 besteht aus Streifen, die sich mit Streifen der Teilfläche A2 abwechseln. Ein Verhältnis der ersten Teilfläche A1 zu der zweiten Teilfläche A2 beträgt bei dem dargestellten Ausführungsbeispiel etwa 0,66.

Die Kanäle 20 in den Talabschnitten 15 können durch Verformen nur einer der Platten 16, 18 ausgeformt sein, wobei die von der photovoltaischen Zelle 12 abgewandte Platte 16 verformt ist. Die Platten 16, 18 des Plattenverbunds sind beispielsweise durch Roll-Bonding in den Kopplungsflächen stoffschlüssig verbunden. Nach dem Roll-Bonding erfolgt das Formen der Kanäle 20, 22 durch Verformen mindestens einer der Platten 16, 18 mittels Innenhochdruckumformen und das Verformen des nach dem Roll-Bonding ebenen Plattenverbunds in die Trapezform, beispielsweise durch einen Pressvorgang. Dabei sind beide möglichen Reihenfolgen des Innenhochdruckumformens und des Pressens möglich. Je nach Höhe der Umformung bzw. dem Umformgrad muss bei großen Umformungen zuerst gepresst und anschließend innenhochdruckumgeformt werden. Alternativ kann auch bei kleineren Umformgraden zuerst innenhochdruckumgeformt und im Anschluss durch Pressen umgeformt werden. Neben dem Umformgrad ist die Materialstärke und Duktilität ausschlaggebend für die Reihenfolge. Je duktiler und dicker das Material, desto eher besteht die bevorzugte Option, zuerst innenhochdruckumzuformen und im Anschluss erst den Plattenverbund durch Pressen zu formen. Die Plateauabschnitte 17 können zwischen 15 mm und 100 mm von der photovoltaischen Zelle 12 entfernt sein.

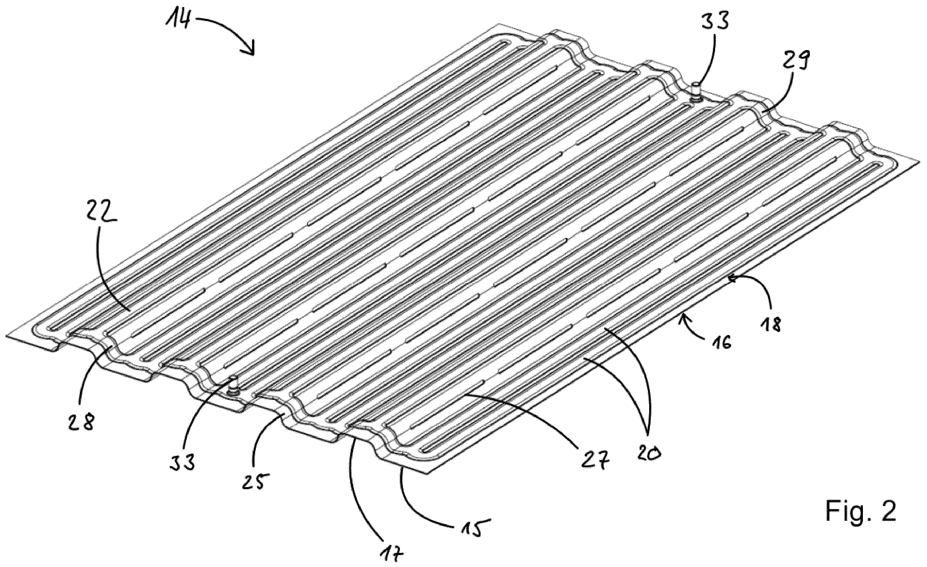

In der Figur 2 ist ein thermischer Absorber 14 für eine weitere Ausführungsform eines PVT-Moduls 10 perspektivisch dargestellt. Der thermische Absorber 14 mit dem Plattenverbund mit Kanälen 20, 22 weist Talabschnitte 15 in einer Kontaktebene und Plateauabschnitte 17 beabstandet von der der Kontaktebene auf. Im Unterschied zu dem zuvor beschriebenen Ausführungsbeispiel sind hier jeweils zwei Kanäle 20 zum Leiten eines flüssigen oder gasförmigen Wärmeträgermediums in jedem Talabschnitt 15 gebildet, während in den Plateauabschnitten 17 jeweils ein Kanal 22 verläuft. Die Kanäle 20 in den Talabschnitten 15 und die Kanäle 22 in den Plateauabschnitten 17 sind an einem ersten Ende mit einem Zulauf 28 und an einem zweiten Ende mit einem Ablauf 29 verbunden, die jeweils in Form eines Sammelkanals ausgebildet sind. Auch der Sammelkanal ist durch Verformen mindestens einer der Platten 16, 18 mittels Innenhochdruckumformen ausgebildet. Der Zulauf 28 und der Ablauf 29 weisen je einen Stutzen 33 zur Verbindung mit einer nicht dargestellten Vorlauf- bzw. Rücklaufleitung auf. Die Stutzen können, wie dargestellt, senkrecht zu der Ebene des Plattenverbunds ausgerichtet sei. Alternativ können diese auch in der Ebene des Plattenverbunds liegen. Der Umformgrad ist bei dem dargestellten Ausführungsbeispiel gering. Die Übergänge von den Plateauabschnitten 17 zu den Flankenabschnitten 25 und von den Flankenabschnitten 25 zu den Talabschnitten 15 weisen einen Radius auf, der ein Verformen des Plattenverbunds in die Trapezform nach dem Innhochdruckumformen der Kanäle 20, 22, des Zulaufs 28 und des Ablaufs 29 erlaubt.

Die nicht dargestellten Teilflächen A1 und A2 sind analog zu Figur 1 angeordnet. Ein Verhältnis der ersten Teilfläche A1 zu der zweiten Teilfläche A2 beträgt bei dem dargestellten Ausführungsbeispiel etwa 1. Im Folgenden werden exemplarische Zusammenhänge zwischen den Flächen-, Massenstrom- und Leistungsaufteilungen der Kanäle 20 in den Talabschnitten 15 mit unmittelbarem Kontakt zu der photovoltaischen Zelle 12 und der Kanäle 22 in den Plateauabschnitten 17 ohne unmittelbaren Kontakt zu der photovoltaischen Zelle 12 beschrieben. In einer Auslegung des PVT-Moduls 10 bzw. des thermischen Absorbers 14 könnten die Flächenanteile A1, in denen der Plattenverbund Kontakt zu dem PV-Modul 12 hat, sowie der Flächenanteile A2, die nur Kontakt zur Umgebungsluft haben, bei jeweils 50% liegen. Durch eine strömungsmechanische Gestaltung der Kanäle 20, 22 könnte des Weiteren der Anteil eines Massenstroms, welcher durch die Kanäle 20 in den Talabschnitten 15 geführt wird, bei 70% liegen. In diesem Fall würden 30% des Massenstroms durch die Kanäle 22 in den Plateauabschnitten 17 fließen, die nicht unmittelbar an der photovoltaischen Zelle 12 anschließen. Bei Tag würden bei 1.000 W/m2 Sonnennormaleinstrahlung, einer Eintrittstemperatur des flüssigen oder gasförmigen Wärmeträgermediums in den thermischen Absorber 14 von 20°C sowie einer Umgebungstemperatur von 25 °C ca. 85% der gewonnen, thermischen Leistung auf die Kanäle 20 in den Talabschnitten 15 entfallen, was bei Verwendung z.B. eines 1/1 Wasser-Glykol-Gemisches ca. 33,7 kW pro kg/s Massenstrom entsprechen würde. 15% der Leistung würden aus den Kanäle 22 in den Plateauabschnitten 17 stammen, ca. 12,7 kW pro kg/s Massenstrom. Bei Nacht würden sich die Verhältnisse umkehren. Bei gleicher Flächen- und Massenstromaufteilung des thermischen Absorbers 14 würden nur noch 67% der thermischen Leistung aus den Kanälen 20 in den Talabschnitten 15 und 33% aus den Kanälen 22 in den Plateauabschnitten 17. Die spezifische Leistung pro Massenstrom der Kanäle 20 in den Talabschnitten 15 würde um 85% von 33,7 auf 5,7 kW/(kg/s) fallen, während sie bei den Kanälen 22 in den Plateauabschnitten 17 nur um 50% von 12,7 auf 6,5 kW/(kg/s) sinken würde. Das Beispiel zeigt, dass sich unter Bedingungen geringer oder vernachlässigbarer Sonneneinstrahlung der Anteil der thermischen Energie, der aus der Umgebungsluft gewonnen wird, überproportional im Vergleich zum Fall intensiverer Einstrahlung erhöht. Dies kann durch die gezielte Auslegung der Flächen- und Massenstromanteile dazu genutzt werden, bei geringer Sonnenstrahlung die Leistungsfähigkeit des thermischen Absorbers 14 z.B. für den Betrieb von Wärmepumpen sicherzustellen. Für Breitengerade, in denen eine geringere Sonnenstrahlungsleistung zu erwarten ist, würde also der Flächenanteil der zweiten Teilfläche A2 der Kanäle 22 in den Plateauabschnitten 17 tendenziell höher gewählt werden.

Bei einem Verfahren zur Herstellung des PVT-Moduls 10 bzw. des thermischen Absorbers 14 wird ein Verhältnis der ersten Teilfläche A1 zu der zweiten Teilfläche A2 in Abhängigkeit einer lokal oder regional bedingt erwartbaren Sonnenstrahlungsleistung gewählt. Alternativ oder zusätzlich wird ein Verhältnis des Massenstroms des flüssigen oder gasförmigen Wärmeträgermediums durch die Kanäle 20 in den Talabschnitten 15 zu dem Massenstrom durch die Kanäle 22 in den Plateauabschnitten 17 in Abhängigkeit der lokal oder regional bedingt erwartbaren Sonnenstrahlungsleistung gewählt. Die Massenströme lassen sich, wie in dem Ausführungsbeispiel, durch eine Anzahl und/oder durch einen Strömungsquerschnitt der Kanäle 20, 22 einstellen.

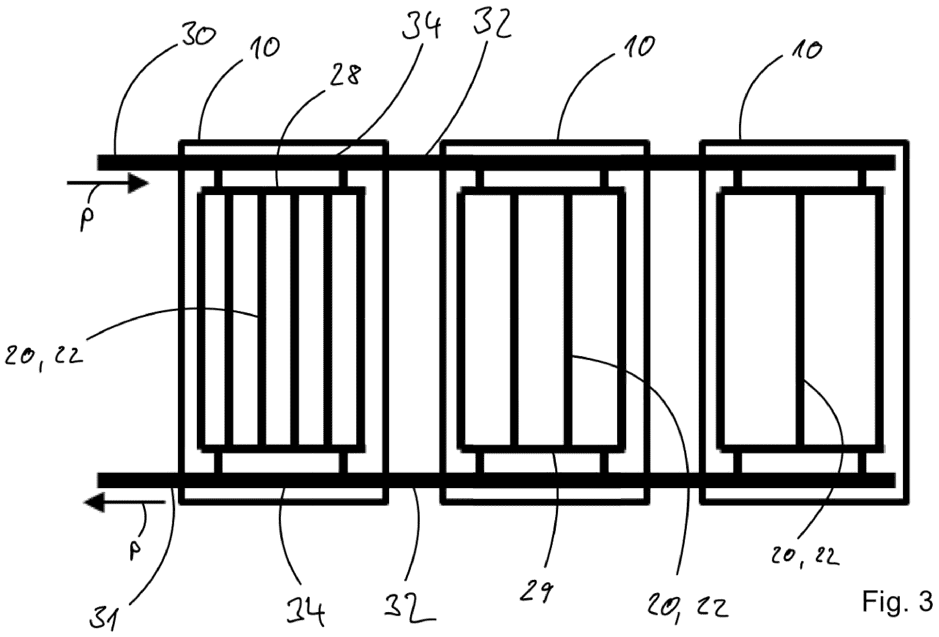

In der Figur 3 ist eine Ausführungsform einer PVT-Anordnung schematisch dargestellt. Die PVT-Anordnung weist beispielsweise drei PVT-Module 10 auf, wobei die Kanäle 20, 22 jedes PVT-Moduls 10 einen Zulauf 28 mit einem Ablauf 29 verbinden. Die Zuläufe 28 der PVT-Module 10 sind mit einer Vorlaufleitung 30 verbunden und die Abläufe 29 mit einer Rücklaufleitung 31. Die Pfeile P stellen die Strömungsrichtung des flüssigen oder gasförmigen Wärmeträgermediums dar. Die Kanäle 20, 22 der jeweiligen PVT-Module 10 weisen in Richtung der Strömung in der Vorlaufleitung 30 einen abnehmenden hydraulischen Widerstand auf. Der abnehmende hydraulische Widerstand der PVT-Module 10 kann durch Unterschiede in einer Anzahl und/oder eines Strömungsquerschnitts der jeweiligen Kanäle 20, 22 ausgebildet sein. Die Vorlaufleitung 30 und/oder die Rücklaufleitung 31 können abschnittsweise als Sammelkanäle 34 in dem Plattenverbund der jeweiligen PVT-Module 10 ausgebildet sind, wobei die Sammelkanäle 34 zwischen den PVT-Modulen 10 über Rohre 32 verbunden sind.

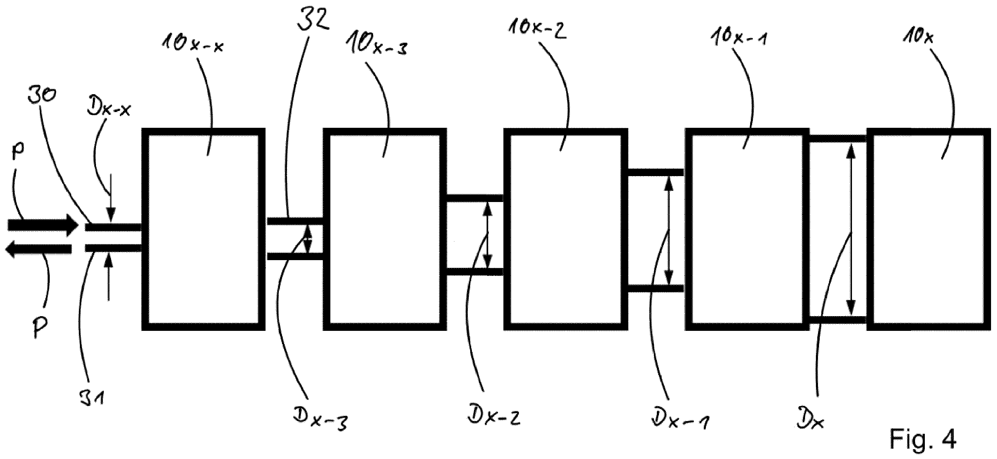

In der Figur 4 ist eine weitere Ausführungsform der PVT-Anordnung in einer schematischen Darstellung gezeigt. In dem Ausführungsbeispiel sind Anschlüsse der hier nicht dargestellten Sammelkanäle 34, siehe Figur 3, in den PVT-Modulen 10 derart gestaltet sind, dass die PVT-Module 10 nur in der Reihenfolge ihres ansteigenden hydraulischen Widerstands miteinander verbindbar sind. Die PVT-Module 10 sind hier mit einem Index gekennzeichnet, wobei das PVT-Modul 10_{X} den geringsten Strömungswiderstand aufweist, das PVT-Modul 10_{X-1} den nächsthöheren, das PVT-Modul 10_{X-2} den wiederum nächsthöheren usw. Das PVT-Modul 10_{X-X} weist den höchsten Strömungswiderstand auf.

Um die Montage in der korrekten Reihenfolge zu gewährleisten, sind in diesem Ausführungsbeispiel die Abstände Dₓ, D_{X-1}, D_{X-2}, D_{X-3} usw. bis D_{X-X} zwischen den Anschlüssen für die Rohre 32 von dem PVT-Modul 10_{X} zu dem PVT-Modul 10_{X-X} schrittweise abnehmend gestaltet. Unterschiedliche Verbinder-Typen können ein Verwechseln der Vor- und Rücklaufleitung 30, 31 verhindern. Alternativ können die Anschlüsse zu diesem Zweck unsymmetrisch zueinander angeordnet sein oder nur die Rohre 32 der Vorlaufleitung 30 weisen eine sich verändernde Lage auf, während die Rohre 32 der Rücklaufleitung 31 immer an der gleichen Stelle angeordnet sind oder umgekehrt.

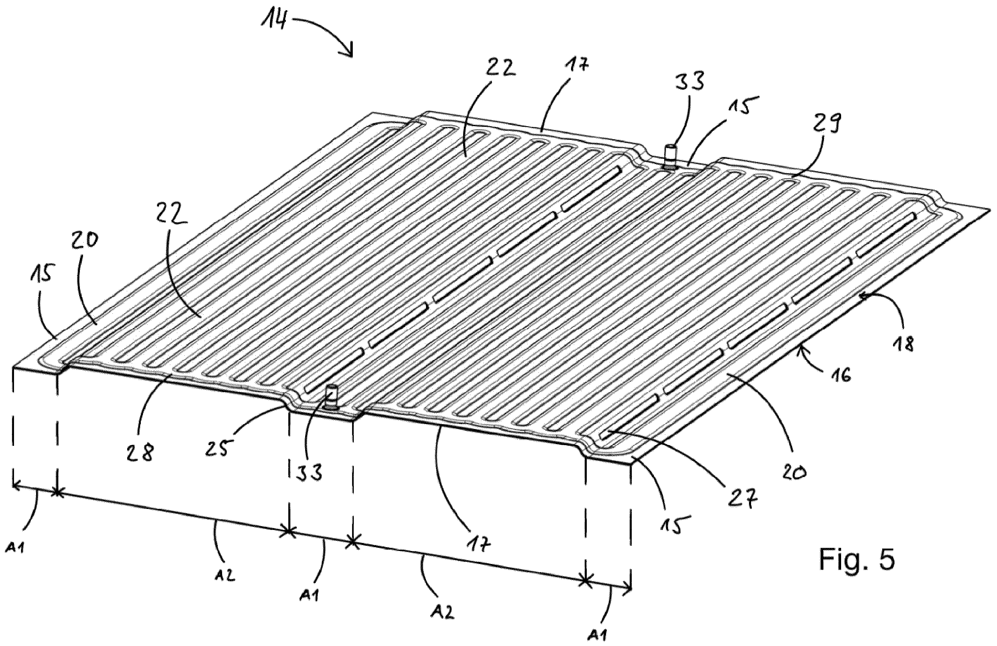

In der Figur 5 ist eine weitere Ausführungsform eines thermischen Absorbers 14 für ein PVT-Modul 10 perspektivisch dargestellt. Der Plattenverbund des thermischen Absorbers weist drei Talabschnitte 15 und zwei Plateauabschnitte 17 mit jeweils dazwischen angeordneten Flankenabschnitten 25 auf. Die Kanäle 20, 22 zum Leiten des flüssigen oder gasförmigen Wärmeträgermediums (nicht dargestellt) sind in den Talabschnitten 15 und in dem Plateauabschnitten 17 angeordnet, wobei entlang jedes Plateauabschnitts 17 eine Vielzahl von Kanälen 22 verläuft. In den Flankenabschnitten 25 sind Durchbrüche 27 angeordnet. Die Kanäle 20, 22 sind jeweils mit dem Zulauf 28 und dem Ablauf 29 in Form eines Sammelkanals verbunden, der durch Verformen mindestens einer der Platten 16, 18 mittels Innenhochdruckumformen ausgebildet sein kann. Der Zulauf 28 und der Ablauf 29 weisen je einen senkrecht zu der Ebene des Plattenverbunds ausgerichtet Stutzen 33 auf.

Die Talabschnitte 15 in der Kontaktebene für den wärmeleitenden Kontakt mit der Oberfläche der photovoltaischen Zelle 12 (nicht dargestellt) weisen eine vergleichsweise kleinere erste Teilfläche A1 auf als in zuvor beschriebenen Ausführungsbeispielen. Von den Teilflächen A1 und A2 sind lediglich deren Erstreckung quer zu den Kanälen 20, 22 bezeichnet. Entlang der Kanäle 20, 22 erstrecken sich die Teilflächen A1 und A2 über den gesamten Plattenverbund. Das Verhältnis der ersten Teilfläche A1 zu der zweiten Teilfläche A2 liegt hier in einer Größenordnung von A1/A2 = 30/70. Auch das Verhältnis des Massenstroms des flüssigen oder gasförmigen Wärmeträgermediums durch die Kanäle 20 in den Talabschnitten 15 zu dem Massenstrom durch die Kanäle 22 in den Plateauabschnitten 17 bzw. Flankenabschnitten 25 beträgt etwa 30/70.

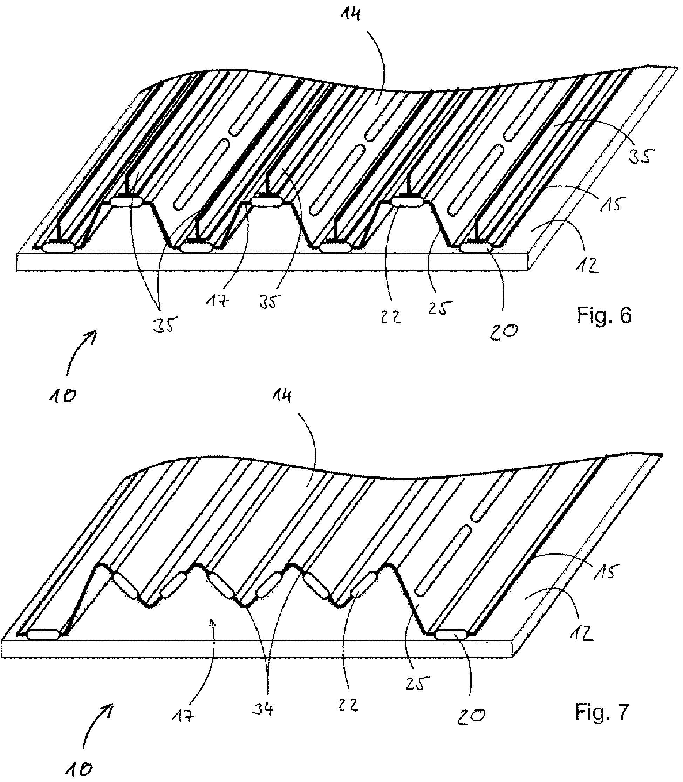

In der Figur 6 ist eine weitere Ausführungsform des PVT-Moduls 10 schematisch dargestellt. Der thermische Absorber 14 weist eine Oberflächenvergrößerung auf, welche die Aufnahme von thermischer Energie per Konvektion aus der Umgebungsluft erhöht. Die Oberflächenvergrößerung besteht aus an dem Plattenverbund angebrachten Rippen 35, die insbesondere entlang der Kanäle 20, 22 angebracht sind. Die Rippen 35 sind an den Talabschnitten 15 und an den Plateauabschnitten 17 angebracht, können aber auch an den Flankenabschnitten 25 angebracht sein.

In der Figur 7 ist eine weitere Ausführungsform des PVT-Moduls 10 in einer schematischen Darstellung gezeigt. Der thermische Absorber 14 weist eine Oberflächenvergrößerung in Form einer Verformung 34 des Plattenverbunds selbst auf, hier im Bereich eines einzelnen Plateauabschnittes 17, wobei eine solche Verformung 34 auch im Bereich der Flankenabschnitte 25 denkbar wäre. Die Verformung 34 weist eine Wellenform oder Zick-zack-Form auf. Dadurch kann eine größere Anzahl von Kanälen 22 über der Teilfläche A2 angeordnet werden, in der die Talabschnitte 15 nicht mit der Oberfläche der photovoltaischen Zelle 12 verbunden sind. Dadurch kann das Verhältnis des Massenstroms des flüssigen oder gasförmigen Wärmeträgermediums durch die Kanäle 20 in den Talabschnitten 15 zu dem Massenstrom durch die Kanäle 22 in den Plateauabschnitten 17 bzw. Flankenabschnitten 25 zusätzlich beeinflusst werden, ohne das Verhältnis der ersten Teilfläche A1 zu der zweiten Teilfläche A2 zu verändern.

### Bezugszeichenliste

- 10: PVT-Modul
- 12: Photovoltaische Zelle
- 14: Thermischer Absorber
- 15: Talabschnitt
- 16: Platte
- 17: Plateauabschnitt
- 18: Platte
- 20: Kanal im Talabschnitt
- 22: Kanal im Plateauabschnitt
- 25: Flankenabschnitte
- 26: Ventilationskanal
- 27: Durchbruch
- 28: Zulauf
- 29: Ablauf
- 30: Vorlaufleitung
- 31: Rücklaufleitung
- 32: Rohr
- 33: Stutzen
- 34: Verformung
- 35: Rippe
- A1: Erste Teilfläche
- A2: Zweite Teilfläche
- D: Abstand
- P: Pfeil

## Patentansprüche

1. PVT-Modul (10) mit einer photovoltaischen Zelle (12) und einem thermischen Absorber (14),
wobei der thermische Absorber einen Plattenverbund aus überlappenden und miteinander in Kopplungsflächen stoffschlüssig verbundenen Platten (16, 18) aufweist, wobei die Platten außerhalb der Kopplungsflächen getrennt voneinander sind,
wobei zwischen den Platten außerhalb der Kopplungsflächen Kanäle (20, 22) durch einen Umformprozess an mindestens einer der Platten ausgebildet sind, wobei die Kanäle ein in dem Plattenverbund integriertes Kanalsystem bilden, wobei der Plattenverbund mit der photovoltaischen Zelle (12) in wärmeleitendem Kontakt stehenden Talabschnitte (15) sowie von der photovoltaischen Zelle (12) beabstandet angeordnete Plateauabschnitte (17) und Flankenabschnitte (25) aufweist,
wobei die Kanäle (20, 22) zum Leiten eines flüssigen oder gasförmigen Wärmeträgermediums in den Talabschnitten, und/oder in den Plateauabschnitten und/oder in den Flankenabschnitten angeordnet sind.

2. PVT-Modul nach Anspruch 1, **dadurch gekennzeichnet, dass** eine Oberfläche der photovoltaischen Zelle (12) in eine in wärmeleitendem Kontakt mit den Talabschnitten (15) stehende erste Teilfläche (A1) und eine zweite Teilfläche (A2) aufgeteilt ist, wobei ein Verhältnis der ersten Teilfläche zu der zweiten Teilfläche zwischen 0,1 und 10 und insbesondere zwischen 0,5 und 2 liegt.

3. PVT-Modul nach einem der vorhergehenden Ansprüche, **dadurch gekennzeichnet, dass** die Kanäle (20, 22) sich im Querschnitt betrachtet über eine geringere Breite erstrecken als die jeweilige Erstreckung des zugehörigen Talabschnitts (15), Plateauabschnitts (17) oder Flankenabschnitts (25).

4. PVT-Modul nach einem der vorhergehenden Ansprüche, **dadurch gekennzeichnet, dass** die Kanäle (20, 22) ausschließlich in den Talabschnitten und in den Plateauabschnitten oder ausschließlich in den Talabschnitten und in den Flankenabschnitten angeordnet sind.

5. PVT-Modul nach einem der vorhergehenden Ansprüche, **dadurch gekennzeichnet, dass** der Plattenverbund die Form eines Wellblechs oder eines Trapezblechs aufweist.

6. PVT-Modul nach einem der vorhergehenden Ansprüche, **dadurch gekennzeichnet, dass** die Talabschnitte (15) und/oder die Plateauabschnitte (17) als Rundung einer Biegekante zwischen zwei Flankenabschnitten (25) ausgebildet sind.

7. PVT-Modul nach einem der vorhergehenden Ansprüche, **dadurch gekennzeichnet, dass** die Flankenabschnitte (25) und die Plateauabschnitte (17) zu einer Umgebung hin frei sind.

8. PVT-Modul nach einem der vorhergehenden Ansprüche, **dadurch gekennzeichnet, dass** die Plateauabschnitte (17) über die Flankenabschnitte (25) mit den Talabschnitten (15) verbunden sind, wobei die Plateauabschnitte mit den Flankenabschnitten und der photovoltaischen Zelle (12) einen Ventilationskanal (26) bilden.

9. PVT-Modul nach Anspruch 8, **dadurch gekennzeichnet, dass** in den Flankenabschnitten (25) und/oder den Plateauabschnitten (17) Durchbrüche (27) durch den Plattenverbund als Ventilationsöffnungen vorgesehen sind.

10. PVT-Modul nach einem der vorhergehenden Ansprüche, **dadurch gekennzeichnet, dass** die Kanäle (20) in den Talabschnitten (15) durch den Umformprozess an nur einer der Platten (16, 18) ausgeformt sind, wobei die von der photovoltaischen Zelle (12) abgewandte Platte (16) verformt ist.

11. PVT-Modul nach einem der vorhergehenden Ansprüche, **dadurch gekennzeichnet, dass** die Plateauabschnitte (17) zwischen 15 mm und 100 mm von der photovoltaischen Zelle (12) entfernt sind.

12. PVT-Modul nach einem der vorhergehenden Ansprüche, **dadurch gekennzeichnet, dass** die Kanäle (20, 22) an einem ersten Ende mit mindestens einem Zulauf (28) und an einem zweiten Ende mit mindestens einem Ablauf (29) verbunden sind.

13. PVT-Modul nach Anspruch 12, **dadurch gekennzeichnet, dass** der Zulauf (28) und/oder der Ablauf (29) einen Sammelkanal aufweisen, wobei der Sammelkanal durch den Umformprozess an mindestens einer der Platten (16, 18) ausgebildet ist.

14. Verfahren zur Herstellung eines PVT-Moduls nach einem der Ansprüche 2 bis 13, **dadurch gekennzeichnet, dass** ein Verhältnis der ersten Teilfläche (A1) zu der zweiten Teilfläche (A2) in Abhängigkeit einer lokal oder regional bedingt erwartbaren Sonnenstrahlungsleistung und/oder lokal oder regional bedingt erwartbaren Umgebungstemperaturen gewählt wird.

15. PVT-Anordnung mit mindestens zwei PVT-Modulen (10) nach einem der Ansprüche 1 bis 13, **dadurch gekennzeichnet, dass** die Kanäle (20, 22) jedes PVT-Moduls (10) einen Zulauf (28) mit einem Ablauf (29) verbinden, wobei die Zuläufe (28) der PVT-Module (10) mit einer Vorlaufleitung (30) verbunden sind und dass die Abläufe (29) der PVT-Module (10) mit einer Rücklaufleitung (31) verbunden sind,
wobei die Kanäle (20, 22) der jeweiligen PVT-Module (10) in Richtung einer Strömung in der Vorlaufleitung (30) einen abnehmenden hydraulischen Widerstand aufweisen.
